# EUROPÄISCHE PATENTANMELDUNG

(11) **EP 2 184 149 A1**
(43) Veröffentlichungstag der Anmeldung: **12.05.2010**
(21) Anmeldenummer: 08019342.8
(22) Anmeldetag: 05.11.2008
(51) Int. Cl.: B29C 43/18, B29C 45/14, B29C 70/78, B29C 33/42, B29L 31/00

(54) **Verfahren und Vorrichtung zur Herstellung eines Formteils mit Dekoroberfläche**

(71) Anmelder: Peguform GmbH, 79268 Bötzingen (DE)
(72) Erfinder: Schirmer, Hans, 68600 Heiteren (FR); Vendangeot, Francis, 68000 Colmar (FR)
(74) Vertreter: Neunert, Peter Andreas

(57) **Zusammenfassung**

Die vorliegende Erfindung betrifft ein Verfahren zur Herstellung eines Formteils 7 mit Dekoroberfläche 5 durch Hinterformen, Hinterprägen oder Hinterpressen einer in ein Formwerkzeug eingelegten, aus thermoplastischem Kunststoff bestehenden Folie. Dabei wird die als Negativ auf der inneren Oberfläche 4 einer Formwerkzeugmatrize 2 abgebildete Prägestruktur in einem thermischen Prägeschritt auf die Dekorfolie übertragen.

## Beschreibung

Die Erfindung betrifft ein Verfahren zur Herstellung eines Formteils mit Dekoroberfläche mit den Merkmalen des Oberbegriffs des Anspruchs 1.

Die Erfindung betrifft auch eine Vorrichtung zur Herstellung eines Formteils mit Dekoroberfläche mit den Merkmalen des Oberbegriffs des Anspruchs 7.

Gattungsgemäße Kunststoffformteile, insbesondere Innenverkleidungsteile für Kraftfahrzeuge, werden heute üblicherweise dadurch hergestellt, dass ein Dekormaterial in ein Formwerkzeug eingelegt wird und anschließend mit einem thermoplastischen Kunststoff hinterspritzt, hinterprägt oder hinterpresst wird.

In der DE 198 51 117 C2 wird ein Verfahren zur Herstellung eines Formteils durch Hinterspritzen oder Hinterpressen eines eine strukturierte Oberfläche aufweisenden Dekormaterials beschrieben, wobei ein Werkzeug eingesetzt wird, das auf seiner mit dem Dekormaterial in Berührung tretenden Oberfläche eine Oberflächenstruktur aufweist, welche dem Negativ der gewünschten Oberflächenstruktur des Dekormaterials entspricht. Beim Hinterpressen oder Hinterspritzen wird nun die gewünschte Oberflächenstruktur dem Dekormaterial eingeprägt. Dabei überprägt das Prägemuster des Werkzeuges die ursprüngliche Oberflächenstruktur des Dekormaterials, wobei die Gefahr besteht, dass das optische Erscheinungsbild des Dekors darunter leidet.

Die DE 101 13 272 A1 beschreibt ein Verfahren zur Herstellung von Kunststoffformteilen, die mit Dekormaterialien beschichtet sind, wobei Dekormaterialien eingesetzt werden, die bereits strukturiert sind und deren Oberfläche im Werkzeug selber nicht mehr geprägt wird. Um eine Schädigung des Dekormaterials beim Hinterspritzen oder Hinterpressen zu vermeiden, wird der Schmelzdruck beim Einlassen in das Werkzeug niedrig gehalten und es werden nach dem Formgebungsprozess darüber hinaus zusätzliche Maßnahmen ergriffen, um die Oberflächenqualität zu konservieren. Das in der DE 101 13 272 A1 beschriebene Verfahren ist insbesondere für Leder als Dekormaterial geeignet.

Die DE 10 2005 043 180 A1 beschreibt ein Verfahren zur Herstellung eines Formkörpers, der aus einer Trägerschicht aufgebaut ist, deren Oberfläche zumindest teilweise mit einer genarbten Folie überzogen ist. Dazu wird eine ungenarbte Folie in ein Werkzeug eingelegt, dessen Oberfläche das Negativ der aufzubringenden Narben aufweist. Beim Hinterformen mit dem Trägermaterial wird die Folie nun in das Negativ der Narben des Werkzeugs gedrückt. Da die Folie sich gleichzeitig mit dem Kunststoff der Kunststoffträgerschicht verbindet, bleibt die Narbenstruktur nach dem Erstarren der Trägerschicht erhalten. Um die Ausformung der Narben in der Folie zu unterstützen, kann zwischen der Folienoberfläche und der prägenden Oberfläche des Formwerkzeuges ein Vakuum angelegt werden.

In der DE 37 42 457 A1 wird ein Herstellverfahren für Kunststoffformteile mit dekorativ geprägter Oberflächenbeschichtung beschrieben, bei dem eine ungeprägte tiefziehfähige Folie in ein Formwerkzeug eingelegt wird, das auf seiner Innenoberfläche wenigstens teilweise eine Prägestruktur aufweist. Anschließend wird ein aufgeschmolzener thermoplastischer Kunststoff in das Formwerkzeug eingespritzt. Gleichzeitig oder im Anschluss an das Einspritzen des aufgeschmolzenen thermoplastischen Kunststoffes wird durch Injektion eines Gases in die Kunststoffschmelze zusätzlicher Druck aufgebaut, der zumindest bis zur teilweisen Erstarrung des thermoplastischen Kunststoffes aufrecht erhalten wird. Dadurch wird gleichzeitig mit dem Spritzgießen des Kernmaterials die Oberflächenfolie gleichmäßig und dauerhaft geprägt.

Das direkte Hinterformen von Dekormaterialien im Formwerkzeug mit einem thermoplastischen Trägermaterial hat als einstufiger Prozess zur Herstellung von Formteilen mit Dekoroberfläche zwar gegenüber den früher häufig eingesetzten zweistufigen Verfahren, bei denen das Formteil nach dem Ausformen mit der Dekorhaut kaschiert wurde, den Vorteil, dass es wesentlich weniger aufwändig ist, jedoch ist es aufgrund der Druck- und Temperaturverhältnisse im Formwerkzeug häufig schwierig, die Prägung korrekt und optisch einwandfrei vom Negativ der Prägeschicht auf die Dekorfolie zu übertragen.

Häufig versucht man das Verfahren dadurch zu verbessern, dass man die ungeprägte Rohfolie vor dem Einlegen in das Formwerkzeug erwärmt, sodass die Folie beim anschließenden Hinterformen im Formwerkzeug leichter die Konturen der Prägeschicht annimmt. Die vorherige Erwärmung der Folie hat jedoch den Nachteil, dass die Folie dabei sehr weich wird, wodurch ihre Handhabung erschwert wird. Dabei kommt es häufig zum Faltenwurf, wodurch die optische Qualität der Dekoroberfläche leidet. Hinzu kommt, dass die Dekorfolie bis zum Kontakt mit der Werkzeugoberfläche häufig stark abkühlt, sodass keine optimale Abformung der Folie auf der Werkzeugoberfläche mehr möglich ist. Das führt dann auch dazu, dass die Kunststofffolie ungleichmäßig an die Werkzeugwand gedrückt wird.

Eine weitere Optimierung der Abformung der Werkzeugoberfläche auf der Dekorfolie kann durch partielles Beheizen des Formteilwerkzeuges erfolgen. Diese Möglichkeit wird bspw. in der DE 37 42 457 A1 beschrieben. Der Nachteil des in dem oben genannten Dokument beschriebenen Verfahrens liegt jedoch darin, dass eine vollständige Erwärmung des gesamten Formwerkzeuges erfolgt, was nicht nur ein relativ langsamer Prozess ist, sondern auch mit einem hohen Energieaufwand verbunden ist. Hinzu kommt, dass bei derartigen Verfahren als Heiz- oder Kühlmedium in der Regel Wasserdampf, Wasser oder Öl eingesetzt wird, was relativ langsame und in Bezug auf die Höchsttemperatur beschränkte Wärmeübertragungsmedien sind.

Es besteht somit weiterhin das Problem, ein einfaches Verfahren zu finden, um die Prägung oder Struktur einer Oberfläche des Formwerkzeuges, die als Negativ für die gewünschte Oberflächenstruktur des Dekormaterials vorgesehen ist, optisch einwandfrei auf die Dekoroberfläche zu übertragen.

Gelöst wird das Problem durch ein Verfahren mit den Merkmalen des Anspruchs 1. Vorteilhafte Ausgestaltungen des erfindungsgemäßen Verfahrens sind Gegenstände der entsprechenden Unteransprüche.

Gegenstand der vorliegenden Erfindung ist auch eine Vorrichtung zur Herstellung eines Formteils mit Dekoroberfläche, mit der das erfindungsgemäße Verfahren durchgeführt wird. Gelöst wird diese Aufgabe durch eine Vorrichtung mit den Merkmalen des Anspruchs 7. Vorteilhafte Ausgestaltungen der Vorrichtung sind Gegenstände der entsprechenden Unteransprüche.

Das erfindungsgemäße Verfahren beruht darauf, dass eine zunächst unstrukturierte, aus einem thermoplastischen Kunststoff bestehende Folie in eine Formwerkzeugmatrize eingelegt wird, die auf ihrer inneren Oberfläche eine als Negativ für die Dekoroberfläche ausgebildete Prägestruktur besitzt. Beim Formgebungsprozess wird nun in einem thermischen Prägeschritt die Struktur der inneren Oberfläche der Formwerkzeugmatrize auf die Dekorfolie übertragen. Dieser Vorgang wird bei geschlossenem Werkzeug durchgeführt und die Folie kann gleichzeitig oder anschließend mit einem thermoplastischen Kunststoff hinterformt oder hinterpresst werden. Nach dem anschließenden Abkühlen des Formwerkzeuges kann das Formteil entformt und dem Formwerkzeug entnommen werden.

Bei dem thermischen Prägeschritt wird die eingelegte Folie nahezu auf ihre Schmelztemperatur erhitzt und erweicht dabei, so dass sie sich auf ideale Weise der Prägestruktur der Formwerkzeugmatrize anpasst. Das Aufheizen der Dekorfolie erfolgt mittels eines konturnahen elektrischen Heizelementes. Dabei ist entweder die strukturierte innere Oberfläche der Formwerkzeugmatrize entweder selber mit einem konturnahen Heizelement kombiniert oder es ist in unmittelbarer Nähe der inneren Oberfläche der Formwerkzeugmatrize ein konturnahes Heizelement integriert.

Bei einer vorteilhaften Ausgestaltung der vorliegenden Erfindung ist die innere Oberfläche der Formwerkzeugmatrize als Teil einer Induktionsheizung ausgebildet. Diese Ausgestaltung der Erfindung erlaubt es, dass die Formwerkzeugoberfläche innerhalb kürzester Zeit aufgeheizt werden kann, ohne dass dabei das gesamte Formwerkzeug erwärmt werden muss.

Gegenüber bekannten Verfahren, bei denen beispielsweise in unmittelbarer Nähe der Oberfläche konturnahe Temperierkanäle vorgesehen sind, die mit Dampf, Wasser oder Öl temperiert werden, hat das erfindungsgemäße Verfahren den Vorteil, dass die Energieübertragung schneller erfolgt und zudem höhere Temperaturen erreicht werden können. Darüber hinaus ist die Ausbildung von konturnahen Temperierkanälen mit einem relativ hohen technischen Aufwand verbunden, wodurch das Formwerkzeug zusätzlich verteuert würde.

Eine weitere vorteilhafte Ausgestaltung der vorliegenden Erfindung sieht vor, dass in der Formwerkzeugmatrize in unmittelbarer Nähe zur strukturierten Formwerkzeugoberfläche eine konturnahe Widerstandsheizung vorgesehen ist, mit deren Hilfe wiederum sehr schnell gezielt die strukturierte Oberfläche der Formwerkzeugmatrize aufgeheizt werden kann, wobei die anliegende Dekorfolie so weit erwärmt wird, dass sie sich der Prägestruktur der Oberfläche der Formwerkzeugmatrize auf ideale Weise anpasst.

Der wesentliche Vorteil der beiden oben geschilderten Ausgestaltungen der Erfindung gegenüber den bisher angewandten Methoden besteht darin, dass sehr kurze Aufheizzeiten und hohe Temperaturen realisiert werden können, wodurch die Taktzeiten wesentlich verringert und damit die Bauteilkosten reduziert werden können und die optische Qualität der Übertragung der Prägestruktur verbessert wird.

Das erfindungsgemäße Verfahren kann besonders vorteilhaft im Zusammenhang mit dem Spritzgießen eingesetzt werden, wobei bspw. eine ungenarbte Folie in ein Spritzgießwerkzeug auf eine prägende Oberfläche eingelegt wird und dort vor dem Einspritzen des thermoplastischen Kunststoffs kurzfristig aufgeheizt wird, wodurch sich die Folie der Narbung der Prägeoberfläche anpasst. Dabei wird durch die heiße Werkzeugwand die Folie oberflächlich auf die optimale Temperatur zur Abformung der Narbung aufgeheizt. Ein Vorheizen der Folie ist nicht mehr notwendig. Um Lufteinschlüsse zwischen Folie und Werkzeugwand zu verhindern, können zusätzliche Entlüftungsbohrungen außerhalb der Sichtkontur vorgesehen sein, wodurch die Gefahr der Faltenbildung weiter reduziert wird.

Eine weitere vorteilhafte Ausgestaltung des erfindungsgemäßen Verfahrens sieht vor, dass die Folie vor dem Einlegen in das Werkzeug gewärmt wird, um das Einlegen in das Werkzeug zu erleichtern. Dazu muss die Folie jetzt jedoch nur leicht erwärmt und auf eine Temperatur gebracht werden, die eine grobe Anpassung an die Werkzeugkontur ermöglicht, so dass die Handhabung der Folie selber kein Problem darstellt, während das eigentliche Aufheizen der Folie zur Anpassung an die Prägestruktur im Werkzeug selber erfolgt.

Einen ähnlich positiven Effekt kann man dadurch erzielen, dass die Folie vor dem Einlegen in das Formwerkzeug durch Vorformen der Geometrie des Formwerkzeugs bzw. des herzustellenden Formteils bereits zumindest grob angepasst wird, so dass ein konturnahes Einlegen der Folie in das Formwerkzeug erleichtert wird. In diesem Fall ist dann ein Vorwärmen der Folie nicht mehr notwendig, kann jedoch als zusätzliche Erleichterung der Produktion mit in diesen Arbeitsschritt integriert werden.

Gegenstand der vorliegenden Erfindung ist auch eine Vorrichtung zur Herstellung von Formteilen mit einer Dekoroberfläche, wobei die Vorrichtung aus einem Formwerkzeug mit einem Formwerkzeugkern und einer Formwerkzeugmatrize besteht und die innere Oberfläche der Formwerkzeugmatrize mit einer als Negativ für die Dekoroberfläche ausgebildeten Prägestruktur versehen ist. In der Formwerkzeugmatrize selber ist im Bereich der inneren Oberfläche ein konturnahes Heizelement integriert, mit dessen Hilfe bei äußert niedrigen Aufheizzeiten die Oberfläche der Matrize aufgeheizt werden kann, wodurch dann die Übertragung einer Prägestruktur bspw. auf eine eingelegte thermoplastische Folie erleichtert wird. Das Verfahren ist nicht nur für das Spritzgießen mit thermoplastischen Kunststoffen, sondern auch allgemein für das Hinterprägen und Hinterpressen mit thermo-plastischen Kunststoffen geeignet.

Sowohl für das Spritzgießen als auch für das Hinterprägen und Hinterpressen können die üblichen thermoplastischen Kunststoffe, wie z. B. Polypropylen, Polyethylen, Polystyrol, Acrylnitril-Butadienstyrol, Polycarbonat, Polyvinylchlorid, Polymethylmethacrylat und Polyethylenterephthalat oder Copolymerisate davon eingesetzt werden, wobei bei vorteilhaften Ausführungsformen zusätzlich zur Stabilisierung des Formteils Fasern eingesetzt werden können.

Als Folienmaterial eignet sich insbesondere Polypropylen, Polyethylen oder Polyvinylchlorid.

Nach dem Formgebungsprozess wird das Werkzeug abgekühlt und das Formteil kann dem Formwerkzeug entnommen werden, sobald es so weit abgekühlt ist, dass es formstabil ist. Die Kühlung selber erfolgt über konventionelle Kühlbohrungen, die von einem üblichen Kühlmittel durchströmt werden.

Im Folgenden wird die Erfindung anhand von Abbildungen ausführlich erläutert. Dabei zeigen
- Fig. 1: einen Querschnitt durch ein Formwerkzeug mit einer induktiv beheizten inneren Matrizenoberfläche und
- Fig. 2: einen Querschnitt durch ein Formwerkzeug mit einer integrierten elektrischen Widerstandsheizung.

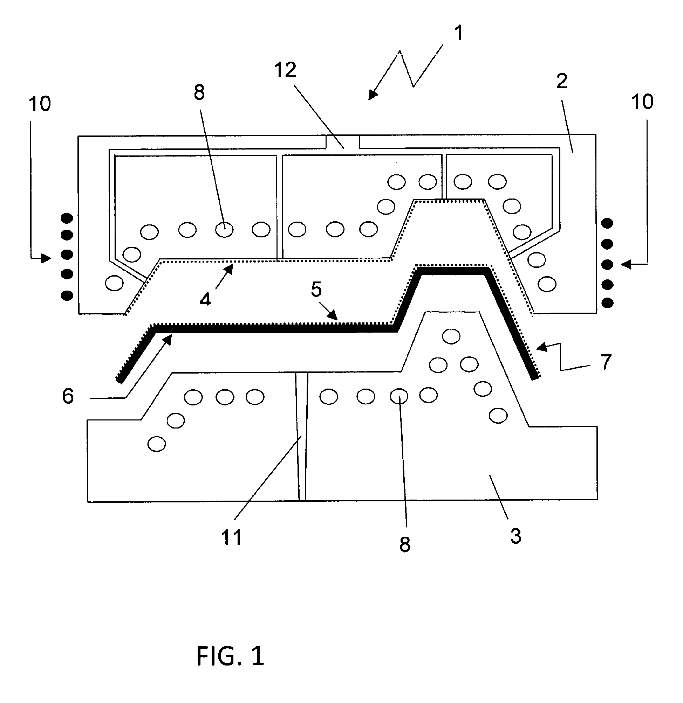

Die Figur 1 zeigt den Schnitt durch ein Formwerkzeug 1, das aufgebaut ist aus einer Formwerkzeugmatrize 2 und einem Formwerkzeugkern 3. Die innere Oberfläche 4 der Formwerkzeugmatrize 2 weist eine Prägestruktur auf, die als Negativ zur Struktur der Oberfläche der Dekorfolie 5 ausgebildet ist. Die Formwerkzeugmatrize 2 ist mit einer induktiven Heizung 10 kombiniert, mit deren Hilfe die innere Matrizenoberfläche 4 aufgeheizt werden kann. In der Formwerkzeugmatrize 2 sind zusätzliche Vakuumkanäle 12 angeordnet, die dazu dienen, die möglicherweise zwischen der eingelegten Dekorfolie und der Matrizenoberfläche 4 eingeschlossene Luft zu entfernen, um auf diese Weise eine Faltenbildung der Dekorfolie zu vermeiden. Darüber hinaus weist die Formwerkzeugmatrize 2 Kühlkanäle 8 auf, die nach dem Formgebungsprozess mit Kühlmedium durchflossen werden, um das Erstarren des Formteils 7 zu beschleunigen.

Auch im Formwerkzeugkern 3, dem Gegenstück zur Formwerkzeugmatrize 2, sind Kühlkanäle 8 angeordnet. In der Mitte des Formwerkzeugkerns 3 ist darüberhinaus ein Einspritzkanal 11 für die thermoplastische Kunststoffmasse zu sehen.

Zwischen Formwerkzeugkern 3 und Formwerkzeugmatrize 2 ist ein fertiges Formteil 7 dargestellt, das aus einem Träger 6 und der Dekoroberfläche 5 aufgebaut ist.

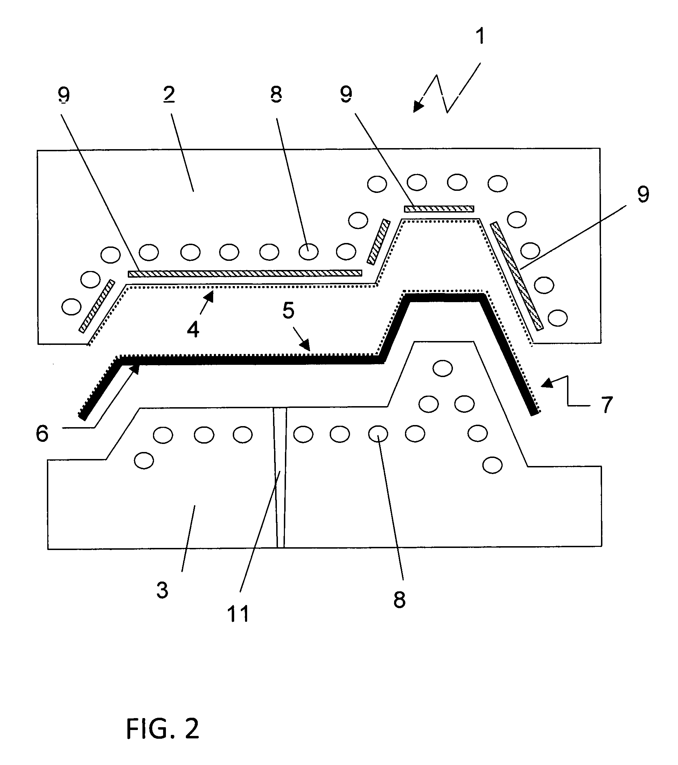

Die Figur 2 zeigt ebenfalls im Querschnitt eine Ausgestaltung eines Formwerkzeuges 1, bei der die induktive Heizung durch eine elektrische Widerstandsheizung 9 ersetzt ist, die im Randbereich der Formwerkzeugmatrize 2 in unmittelbarer Nachbarschaft zur strukturierten Oberfläche 4 angeordnet ist. Bei der vorliegenden Ausgestaltung sind mehrere Heizelemente 9 vorgesehen, die in die Formwerkzeugmatrize integriert sind. Auch hier sind wiederum Kühlkanäle 8 in der Formwerkzeugmatrize 2 angeordnet, die beim Abkühlen des Formwerkzeuges mit einem Kühlmedium durchströmt werden. Bei der in der Figur 2 gewählten Darstellung sind keine Vakuumkanäle vorgesehen, was jedoch nicht bedeutet, dass eine Ausführungsform mit Widerstandsheizunq einer Anordnung von Vakuumkanälen in der Formwerkzeugmatrize entgegenstehen würde. Auch bei dieser Ausführungsform können bei Bedarf problemlos Vakuumkanäle integriert werden.

Das fertige Formteil 7 sowie der Formwerkzeugkern 3 entsprechen der in der Figur 1 gewählten Darstellung.

Der besondere Vorteil der vorliegenden Erfindung gegenüber dem Stand der Technik besteht darin, dass eine Dekorfolie, die oberflächlich strukturiert werden soll, im entsprechenden Formwerkzeug äußerst schnell aufgeheizt und somit einer Prägestruktur der formgebenden Oberfläche des Formwerkzeugs angepasst werden kann. Damit können die Taktzeiten für die Formteilfertigung deutlich verkürzt werden, was zu einer entsprechenden Kostenreduzierung führt.

Daneben wird durch das schnelle Aufheizen der Dekorfolie auf ausreichend hohe Temperaturen bis in die Nähe des Schmelzpunktes des Kunststoffes die Qualität der Übertragung der Struktur verbessert, so dass das optische Erscheinungsbild eines nach dem erfindungsgemäßen Verfahren hergestellten Formteils ebenfalls Vorteile gegenüber einem herkömmlichen Formteil aufweist.

Besonders vorteilhaft kann das erfindungsgemäße Verfahren zur Übertragung einer Narbenstruktur eingesetzt werden, um der Bauteiloberfläche das Aussehen eines Lederdekors zu verleihen.

### Bezugszeichenliste

- 1: Formwerkzeug
- 2: Formwerkzeugmatrize
- 3: Formwerkzeugkern
- 4: innere Oberfläche der Formwerkzeugmatrize
- 5: Dekoroberfläche
- 6: Träger
- 7: Formteil
- 8: Kühlkanal
- 9: Widerstandsheizung
- 10: Induktionsheizung
- 11: Einspritzkanal
- 12: Vakuumkanal

## Patentansprüche

1. Verfahren zur Herstellung eines Formteils (7) mit einer Dekoroberfläche (5) durch Hinterformen, Hinterprägen oder Hinterpressen einer in ein Formwerkzeug (1) eingelegten, aus einem thermoplastischen Kunststoff bestehenden Folie, wobei eine als Negativ auf die innere Oberfläche (4) einer Formwerkzeugmatrize (2) abgebildete Prägestruktur für die Dekoroberfläche in einem thermischen Prägeschritt auf die Folie übertragen wird, während die Folie gleichzeitig oder anschließend mit einem thermoplastischen Kunststoff hinterformt, hinterprägt oder hinterpresst wird, und wobei das Formteil (7) nach anschließendem Abkühlen des Formwerkzeugs (1) entformt und dem Formwerkzeug (1) entnommen wird,
**dadurch gekennzeichnet, dass**
die ins Formwerkzeug (1) eingelegte Folie vor oder während des Hinterformens, Hinterprägens oder Hinterpressens nahezu auf Schmelztemperatur aufgeheizt wird, wobei die Wärmeübertragung auf die Folie über die mit einem konturnahen Heizelement (9, 10) elektrisch beheizte innere Oberfläche (4) der Formwerkzeugmatrize (2) erfolgt.

2. Verfahren nach Anspruch 1,
**dadurch gekennzeichnet, dass**
die innere Oberfläche (4) der Formwerkzeugmatrize (2) induktiv beheizt wird.

3. Verfahren nach Anspruch 1,
**dadurch gekennzeichnet, dass**
das Aufheizen der inneren Oberfläche (4) der Formwerkzeugmatrize (2) durch eine in unmittelbarerer Nachbarschaft zur Oberfläche (4) integrierte elektrische Widerstandsheizung (9) erfolgt.

4. Verfahren nach einem der Ansprüche 1 bis 3,
**dadurch gekennzeichnet, dass**
die zwischen Werkzeugoberfläche (4) und Folie eingeschlossene Luft über in der Formwerkzeugmatrize (2) angeordnete Absaugkanäle (12) abgesaugt wird.

5. Verfahren nach einem der Ansprüche 1 bis 4,
**dadurch gekennzeichnet, dass**
die Folie vor dem Einlegen in das Werkzeug (1) erwärmt wird.

6. Verfahren nach einem der Ansprüche 1 bis 5,
**dadurch gekennzeichnet, dass**
die Folie durch Vorformen bereits der Geometrie des Formwerkzeugs (1) angepasst wird.

7. Vorrichtung zur Herstellung eines Formteils (7) mit Dekoroberfläche (5) bestehend aus einem Formwerkzeug (1) mit einem Formwerkzeugkern (3) und einer Formwerkzeugmatrize (2), wobei die innere Oberfläche (4) der Formwerkzeugmatrize (2) mit einer als Negativ für die Dekoroberfläche (5) ausgebildeten Prägestruktur versehen ist,
**dadurch gekennzeichnet, dass**
ein konturnahes Heizelement (9, 10) zum elektrischen Aufheizen der Formwerkzeugoberfläche (4) vorgesehen ist.

8. Vorrichtung nach Anspruch 7,
**dadurch gekennzeichnet, dass**
die innere Oberfläche (4) der Formwerkzeugmatrize (2) mit einer Induktionsheizung (10) kombiniert ist.

9. Vorrichtung nach Anspruch 7,
**dadurch gekennzeichnet, dass**
in der Formwerkzeugmatrize (2) in unmittelbarer Nachbarschaft zur ihrer inneren Oberfläche (4) eine elektrische Widerstandsheizung (9) angeordnet ist.

10. Vorrichtung nach einem der Ansprüche 7 bis 9,
**dadurch gekennzeichnet, dass**
in der Formwerkzeugmatrize (2) Absaugkanäle (12) zum Absaugen der zwischen eingelegter Folie und Oberfläche (4) der Formwerkzeugmatrize (2) eingeschlossenen Luft angeordnet sind.
